# EUROPEAN PATENT SPECIFICATION

(11) **EP 2 682 217 B1**
(45) Date of publication and mention of the grant of the patent: **10.05.2017**
(21) Application number: 12752662.2
(22) Date of filing: 22.02.2012
(51) Int. Cl.: B23K 20/00, B22F 5/00, B23K 10/02, B22F 3/105, B22F 3/14, B22F 7/02, B22F 7/08, B23P 15/00, B32B 15/01, C22C 1/02, C22C 9/01, C22C 38/02, C22C 38/18, C22C 38/22, F04B 1/12, F04B 1/20, F04B 53/14

(54) **METHOD FOR FABRICATING SLIDABLE MEMBER**
VERFAHREN ZUR HERSTELLUNG EINES GLEITELEMENTS
PROCÉDÉ POUR FABRIQUER UN ÉLÉMENT COULISSANT

(30) Priority: 02.03.2011 JP 2011045554
(43) Date of publication of application: 08.01.2014
(73) Proprietor: TAKAKO INDUSTRIES, INC., Seika-cho, Souraku-gun Kyoto 619-0240 (JP)
(72) Inventor: ISHIZAKI, Yoshitomo, Souraku-gun Kyoto 619-0240 (JP); WATANABE, Kenichi, Souraku-gun Kyoto 619-0240 (JP); MASAHASHI, Naoya, Sendai-shi Miyagi 980-8577 (JP)
(74) Representative: Grünecker Patent- und Rechtsanwälte PartG mbB
(86) International application number: PCT/JP2012/054219
(87) International publication number: WO 2012/117908

(56) References cited:
- EP-A2- 1 508 693
- JP-A- 5 156 388
- JP-A- H1 158 034
- JP-A- 10 196 552
- JP-A- 2000 230 476
- JP-A- 2000 230 476
- JP-A- 2003 112 264
- JP-A- 2007 253 240
- JP-A- 2007 253 240
- JP-A- 2008 121 095
- JP-A- 2012 024 833

## Description

### TECHNICAL FIELD

The present invention relates to a method of manufacturing a sliding member having a sliding portion according to the preamble of claim 1 (see, for example, EP1 508 693 A2).

### BACKGROUND ART

A sliding member that uses a copper alloy for a sliding portion in order to improve a sliding ability of the sliding portion is known in the related art.

JP2005-257035A discloses plating a copper base layer onto a surface of a steel member and sintering a lead-bronze alloy powder to the steel member via the plating. As is evident from a binary phase diagram of iron and copper, a solid solubility of copper in iron is 1.9at% and the solid solubility of iron in copper is 4.6at%, and therefore iron and copper substantially do not enter into a mutual solid solution. As in JP2005-257035A, therefore, plating is typically used as a binder to join the steel member and the copper alloy securely.

Prior art document EP 1 508 693 A2 discloses a sliding member made by sintering a mixture of a bronze powder and a Cu-plated solid lubricant onto a backing plate. Document JP 2007 253240 A relates to joining metal parts like pipes or tubes via a sintering process. Document JP H11 58034 A relates to a method for plating a ferrous material with a brass alloy.

### SUMMARY OF INVENTION

However, when the steel member and the copper alloy are joined via plating, a process for applying plating to the surface of the steel member is required, leading to an increase in manufacturing cost.

The present invention has been designed in consideration of this problem, and an object thereof is to join an iron based metal to a Cu alloy serving as a sliding portion easily and with a high degree of joint strength.

According to the present invention, a method of manufacturing a sliding member having a sliding portion is defined in claim 1.

Embodiments of the present invention and advantages thereof are described in detail below with reference to the accompanying drawings.

### BRIEF DESCRIPTION OF DRAWINGS

FIG. 1 is a sectional view of a piston pump to which a shoe according to an embodiment of the present invention is applied.
FIG. 2 is a view showing a method of manufacturing the shoe according to this embodiment of the present invention in time series.
FIG. 3 is a pattern diagram of a spark plasma sintering device.
FIG. 4 is a view showing heat treatment conditions and pressure application conditions for joining a bulk material 30 and a bulk material 31.
FIG. 5A is a scanning electron microscope photograph showing a joint interface between the bulk material 30 and the bulk material 31 according to a first embodiment.
FIG. 5B is a scanning electron microscope photograph showing the joint interface between the bulk material 30 and the bulk material 31 according to the first embodiment as a mapping image of FeL_{α} obtained through EDX analysis.
FIG. 5C is a scanning electron microscope photograph showing the joint interface between the bulk material 30 and the bulk material 31 according to the first embodiment as a mapping image of CuL_{α} obtained through EDX analysis.
FIG. 6A is a scanning electron microscope photograph showing the joint interface between the bulk material 30 and the bulk material 31 according to the first embodiment as a mapping image of SiK_{α} obtained through EDX analysis.
FIG. 6B is a scanning electron microscope photograph showing the joint interface between the bulk material 30 and the bulk material 31 according to the first embodiment as a mapping image of AlK_{α} obtained through EDX analysis.
FIG. 7A is a scanning electron microscope photograph showing a joint interface between the bulk material 30 and the bulk material 31 according to an example not covered by the present invention.
FIG. 7B is a scanning electron microscope photograph showing the joint interface between the bulk material 30 and the bulk material 31 according to an example not covered by the present invention as a mapping image of FeL_{α} obtained through EDX analysis.
FIG. 7C is a scanning electron microscope photograph showing the joint interface between the bulk material 30 and the bulk material 31 according to an example not covered by the present invention as a mapping image of CuL_{α} obtained through EDX analysis.

### DESCRIPTION OF EMBODIMENTS

Embodiments of the present invention will be described below with reference to the figures.

### <First Embodiment>

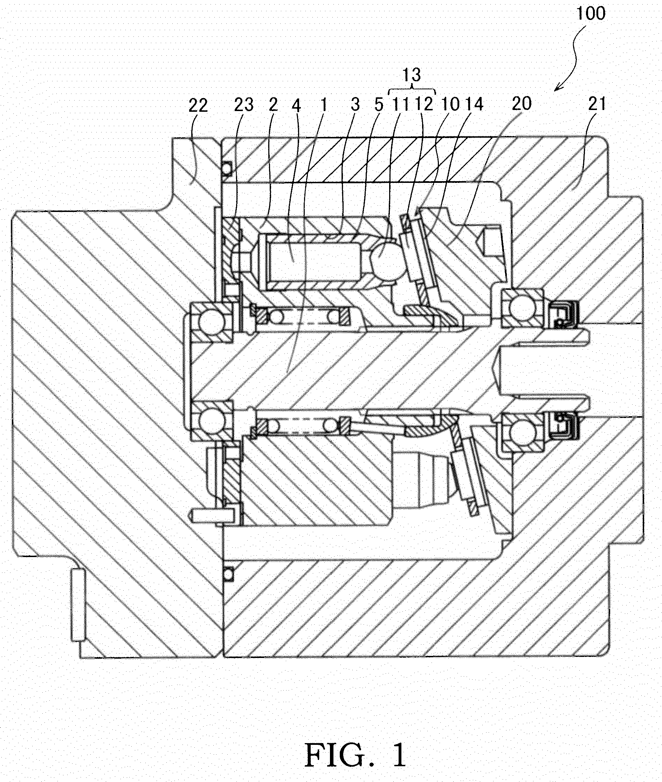

A case in which a sliding member is a shoe of a swash plate type piston pump will be described. First, referring to FIG. 1, a piston pump 100 will be described.

The piston pump 100 is installed in a construction machine such as a hydraulic shovel or a hydraulic crane, for example, in order to supply a working fluid (working oil) to a hydraulic cylinder or a hydraulic motor serving as an actuator.

The piston pump 100 includes a drive shaft 1 to which power from an engine is transmitted, and a cylinder block 2 that rotates as the drive shaft 1 rotates.

A plurality of cylinder bores 3 are opened in the cylinder block 2 to be parallel to the drive shaft 1. A piston 5 that defines a volume chamber 4 is inserted into each cylinder bore 3 to be free to reciprocate.

A shoe 10 is coupled to a tip end of the piston 5 via a spherically-shaped spherical washer 11 to be free to rotate. The shoe 10 includes a flat plate portion 12 formed integrally with the spherical washer 11. The flat plate portion 12 is in surface contact with a swash plate 20 fixed to a case 21. As the cylinder block 2 rotates, the flat plate portion 12 of each shoe 10 slides along the swash plate 20 such that each piston 5 reciprocates by a stroke corresponding to a tilt angle of the swash plate 20. A volume of each volume chamber 4 is increased and reduced by the reciprocation of the piston 5.

A valve plate 23 along which a base end surface of the cylinder block 2 slides is attached to a case 22. An intake port and a discharge port, not shown in the figure, are formed in the valve plate 23. The working oil is led into the volume chamber 4 through the intake port as the cylinder block 2 rotates, and the working oil led into the volume chamber 4 is discharged through the discharge port. By having the piston 5 reciprocate together with the rotation of the cylinder block 2 in this manner, the working oil is continuously taken into and discharged from the piston pump 100.

While the piston pump 100 is operative, the shoe 10 coupled to the tip end of the piston 5 slides along the swash plate 20. Therefore, to ensure that the piston 5 reciprocates smoothly so that the working oil is taken in and discharged with stability, it is necessary to reduce a frictional force between the flat plate portion 12 of the shoe 10 and the swash plate 20. Further, when a discharge pressure of the piston pump 100 is increased, the flat plate portion 12 of the shoe 10 is pressed firmly against the swash plate 20, leading to an increase in the frictional force between the flat plate portion 12 and the swash plate 20. It is therefore necessary to improve a sliding ability of the flat plate portion 12 in order to increase the pressure of the piston pump 100. For this purpose, a sliding portion 14 made of a Cu alloy having a superior sliding ability is provided on a surface of the flat plate portion 12 that slides along the swash plate 20. Hence, the shoe 10 is constituted by a main body portion 13 including the spherical washer 11 and the flat plate portion 12, and the sliding portion 14 that slides along the swash plate 20.

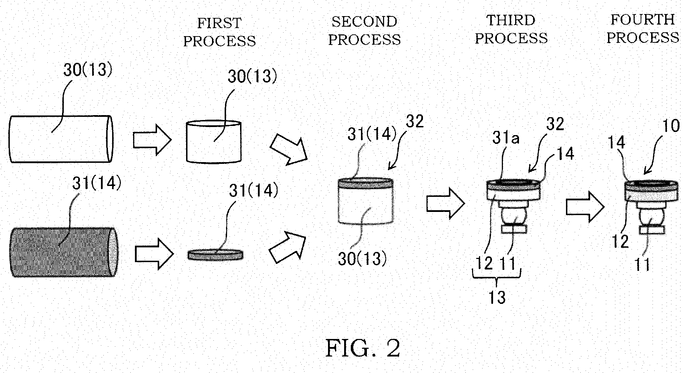

Next, referring to FIGS. 2 to 6, a method of manufacturing the shoe 10 will be described.

As shown in FIG. 2, a bulk material 30 that is made of an iron based metal and functions as the main body portion 13, and a bulk material 31 that is made of a Cu alloy and functions as the sliding portion 14 are used to manufacture the shoe 10. The bulk material 30 and the bulk material 31 are columnar members having an identical diameter to a diameter of the shoe 10. SCM435 (JIS) made of Cr-Mo steel is used as the iron based metal of the bulk material 30. A Cu-Zn based alloy is used as the Cu alloy of the bulk material 31. A Cu alloy is an alloy having copper as a main component. A Cu-Zn based alloy, as used in the method in the present invention, is an alloy having copper as a main component and containing zinc. More specifically, to suppress formation of a brittle CuZn phase, the zinc preferably occupies no more than 35wt% of the alloy. Table 1 shows respective compositions of the bulk material 30 (SCM435) and the bulk material 31 (Cu-Zn based alloy).

Compositions of bulk material 30 (SCM435) and bulk material 31 (Cu-Zn based alloy) (wt%)

**Table 1**

| | C | Si | Mn | P | S | Ni | Cr | Cu | Zn | Fe | Al | Mo |
|---|---|---|---|---|---|---|---|---|---|---|---|---|
| SCM435 | 033∼0.38 | 0.15∼0.35 | 0.60∼0.90 | ≦0.030 | ≦0.030 | ≦0.25 | 0.90∼ 1.20 | | | 96.7∼97.6 | | 0.15∼0.30 |
| Cu-Zn based alloy | | 0.5∼1.5 | | | | 2.0∼4.0 | | 58.7∼68 | 26∼30 | 0.5∼1.3 | 3.0∼4.5 | |

In a first process, the bulk material 30 is cut to a desired thickness. More specifically, the bulk material 30 is cut to a dimension corresponding to an axial direction length of the main body portion 13. The bulk material 31 is also cut to a desired thickness. More specifically, the bulk material 31 is cut to a dimension corresponding to a thickness of the sliding portion 14.

In a second process, respective end surfaces of the bulk material 30 and the bulk material 31 cut to their respective desired thicknesses in the first process are joined to each other by heating and pressure application using a spark plasma sintering (SPS) method. Spark plasma sintering is a sintering method in which diffusion of heat and an electric field is assisted by spark plasma that is generated momentarily when a pulse-form large current is applied to a gap between joining subject bodies at a low voltage.

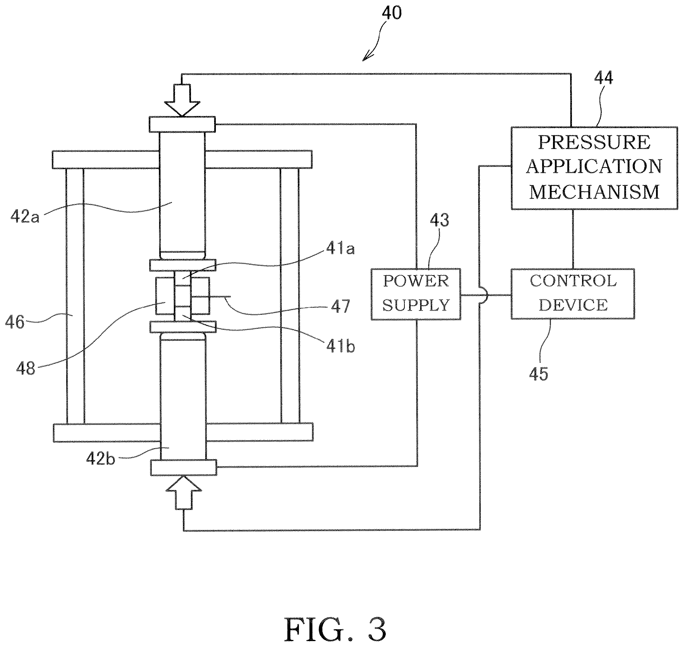

Referring to FIG. 3, a spark plasma sintering device 40 used to implement the spark plasma sintering method of the second process will be described. The spark plasma sintering device 40 includes a cylindrical jig 48 made of high-strength WC, in which a joining subject member is housed, an upper punch 41a and a lower punch 41b that sandwich the joining subject member so that the joining subject member is held in the jig 48, an upper electrode 42a and a lower electrode 42b that are disposed in contact with the upper punch 41a and the lower punch 41 b, respectively, in order to apply a current to the joining subject member, a power supply 43 connected to the upper electrode 42a and the lower electrode 42b, a pressure application mechanism 44 that presses the upper punch 41a and the lower punch 41b via the upper electrode 42a and the lower electrode 42b in order to apply a pressing force to the joining subject member, and a control device 45 that controls the power supply 43 and the pressure application mechanism 44.

The jig 48 is disposed in a vacuum chamber 46 so that the joining subject member is joined in a vacuum atmosphere. A through hole is formed in a trunk portion of the jig 48 to penetrate inner and outer peripheral surfaces thereof, and a thermocouple 47 is inserted into the through hole. The thermocouple 47 is disposed such that a tip end thereof is positioned in the vicinity of a joint surface of the joining subject member, and therefore a temperature of the joint surface of the joining subject member can be measured. A measurement result obtained by the thermocouple 47 is transmitted to the control device 45, and the control device 45 controls the power supply 43 on the basis of the measurement result so that the temperature and a temperature increase speed of the joint surface of the joining subject member reach predetermined set values.

A method of joining the bulk material 30 and the bulk material 31 serving as joining subject members will now be described more specifically. The bulk material 30 and the bulk material 31 are housed in a hollow portion of the jig 48 and sandwiched by the upper punch 41a and the lower punch 41b. As a result, the bulk material 30 and the bulk material 31 are housed in the jig 48 such that respective end surfaces thereof are laminated in contact with each other. A current is then applied to the bulk material 30 and the bulk material 31 via the power supply 43, whereby the bulk material 30 and the bulk material 31 are increased in temperature to a predetermined temperature at a predetermined temperature increase speed. Here, the predetermined temperature, or in other words a joining temperature, is set at or below respective melting points of the bulk material 30 (SCM435) and the bulk material 31 (Cu-Zn based alloy). After the predetermined temperature is reached, a predetermined pressing force is applied to the bulk material 30 and the bulk material 31 by the pressure application mechanism 44 via the upper punch 41a and the lower punch 41 b, whereupon this condition is maintained for a fixed time. Hence, the bulk material 30 and the bulk material 31 are joined by a solid phase reaction caused by generating spark plasma on a joint interface between the bulk material 30 and the bulk material 31 while heating and pressing the bulk material 30 and the bulk material 31 in a condition where the respective end surfaces thereof are in close contact with each other. It should be noted that the bulk material 30 and the bulk material 31 undergo compressive deformation when pressure is applied thereto, leading to a thickness reduction of approximately 5%.

It is known that interdiffusion does not typically occur between iron and copper during normal diffusion joining such as hot pressing, making it difficult to join iron and copper directly. The reason for this, as is evident from a binary alloy phase diagram of iron and copper, is that a solid solubility of copper having an FCC structure in iron having a BCC structure is at most 1.9at% (850°C) while the solid solubility of iron in copper is at most 4.6at% (1096°C), and therefore iron and copper do not form a continuous solid solution with each other. Further, a diffusion constant of copper in iron and the diffusion constant of iron in copper have been reported respectively as Do = 3.76 × 10⁻¹² (m²/s), Q = 181 (kJ/mol) and Do = 1.00 × 10⁻⁵ (m²/s), Q = 197 (kJ/mol), and therefore interdiffusion cannot be expected during normal diffusion joining. As described above, however, the bulk material 30 and the bulk material 31 can be joined directly by a solid phase reaction caused by generating spark plasma on the joint interface between the bulk material 30 and the bulk material 31 while applying a pressing force thereto. A possible reason for this is that high-capacity energy generated when the spark plasma is applied can be concentrated locally, and therefore energy can be concentrated on the joint interface between the bulk material 30 and the bulk material 31, thereby assisting interdiffusion of respective atoms thereof. Moreover, when spark plasma sintering is performed on the bulk material 30 and the bulk material 31, only the respective end surfaces thereof serve as the joint interface, and therefore a joint area can be reduced greatly to approximately one five-thousandth that of a case in which powders are joined to each other by spark plasma sintering. Hence, when spark plasma sintering is performed on the bulk material 30 and the bulk material 31, an amount of energy generated by spark plasma application per unit joint area is large, and therefore the bulk material 30 and the bulk material 31 can be joined directly.

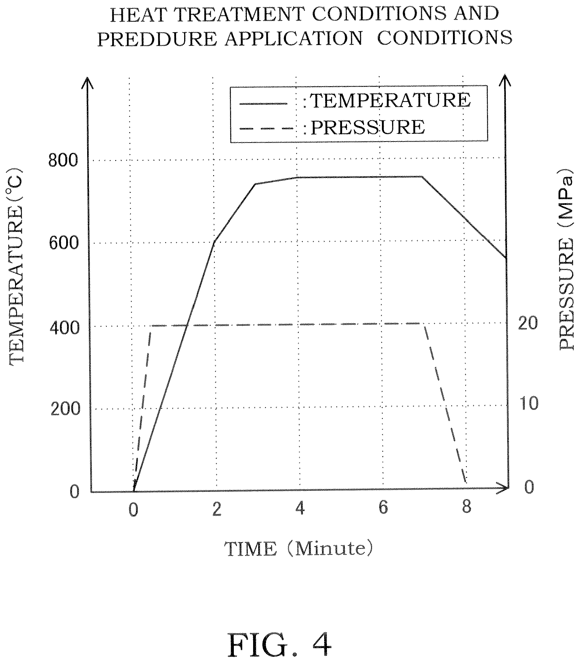

Next, referring to FIG. 4, heat treatment conditions and pressure application conditions for joining the bulk material 30 and the bulk material 31 will be described. In FIG. 4, a solid line indicates temperature and a dotted line indicates pressure. During the heat treatment, the temperature is raised to 600°C in two minutes, raised from 600°C to 730°C in one minute, raised from 730°C to a joining temperature of 750°C in one minute, and then held at 750°C for three minutes, whereupon natural cooling is implemented. The pressure application, meanwhile, is started at the same time as the temperature is increased, whereupon the pressure is maintained at 20MPa and then released simultaneously with the natural cooling. Hence, a total of seven minutes is required for joining, and therefore joining is completed in a short time. By performing joining using the spark plasma sintering method, therefore, joining can be completed in a shorter time than with a conventional joining method such as hot pressing.

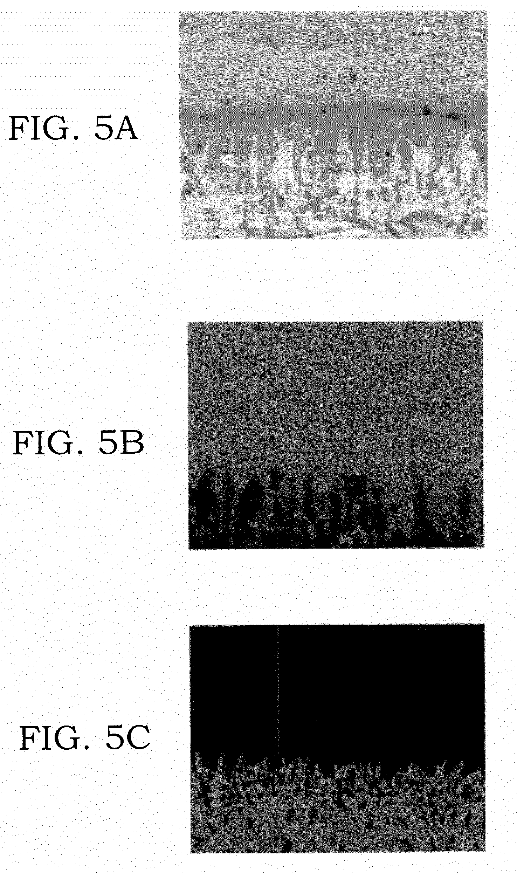

FIGS. 5A to 5C show scanning electron microscope photographs of the joint interface between the bulk material 30 and the bulk material 31 joined under the heat treatment conditions and pressure application conditions shown in FIG. 4. FIG. 5A is a secondary electron image, FIG. 5B is a mapping image of FeL_{α} obtained through EDX analysis, and FIG. 5C is a mapping image of CuL_{α} obtained through EDX analysis. In FIGS. 5A to 5C, an upper side of the photographs shows the SCM435 and a lower side of the photographs shows the Cu-Zn based alloy. As is evident from FIG. 5A, diffusion of the SCM435 to the Cu-Zn based alloy side, leading to the formation of a columnar configuration in which the SCM435 and the Cu-Zn based alloy are interwoven in skewer-like shapes on either side of an initial joint interface, was confirmed. It may be said that this columnar configuration denotes a solid phase diffusion joint between the SCM435 and the Cu-Zn based alloy. Further, as is evident from FIGS. 5B and 5C, atomic interdiffusion was confirmed on either side of the joint interface.

As noted above, it is difficult to generate interdiffusion physically between Fe and Cu, but by supplying a large amount of electrical energy to the solid phase joint interface between the SCM435 and the Cu-Zn based alloy using the spark plasma sintering method, atomic diffusion is assisted, with the result that a solid phase joint is realized between the two materials via the columnar configuration. The actually employed Cu-Zn based alloy is an alloy known as brass, which contains between 20 and 40wt% of Zn and is therefore both workable and strong, and which has been put to practical use as a structural material since ancient times. The melting point of Cu is 1085°C, but by increasing the amount of Zn, the melting point decreases continuously such that a peritectic composition containing 36.8wt% of Zn has a melting point of 902°C. This assists the Zn, which has a melting point of 419°C, and the Cu in forming an FCC solid solution widely up to a peritectic reaction composition, and therefore, by adding Zn, diffusion of the constituent elements of the Cu alloy is achieved more quickly. In other words, by selecting a Cu-Zn based alloy exhibiting superior diffusibility as the Cu alloy, a solid phase joint can be realized using the spark plasma sintering method.

Further, focusing on an affinity between the constituent elements of the SCM435 and the Cu-Zn based alloy and either Fe or Cu, i.e. the main element of the opposing alloy through which the corresponding constituent element diffuses, an investigation into whether or not an inter-alloy concentration gradient is formed between the constituent elements of the SCM435 and the Cu-Zn based alloy was performed on the basis of an equilibrium diagram. It was found as a result that a solubility limit of Si, which is a constituent element of both the SCM435 and the Cu-Zn based alloy, into Cu is 9.95at% at 552°C, while the solubility limit of Si into Fe is 29.8at% at 1200°C. Hence, Si can be expected to diffuse from the Cu-Zn based alloy to the SCM435, and therefore a concentration gradient may be formed. Similarly, the solubility limit of Al, which is a constituent element of the Cu-Zn based alloy, into Fe is 55.0at% at a eutectic temperature of 1102°C, while the solubility limit of Al into Cu is 19.7at% at 567°C. Hence, Al can be expected to diffuse from the Cu-Zn based alloy to the SCM435, and therefore a concentration gradient may be formed.

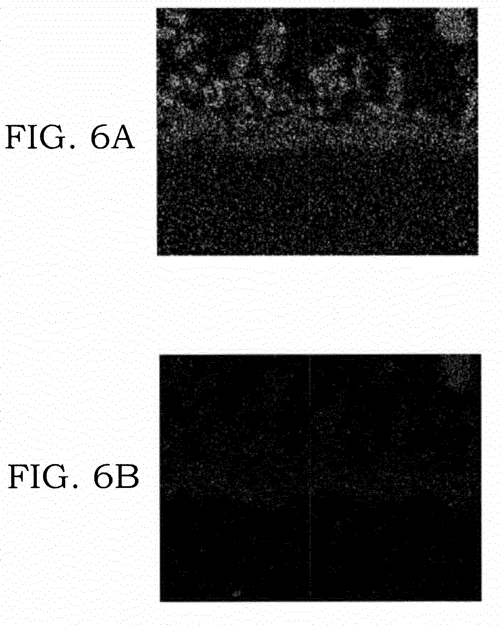

FIGS. 6A and 6B show scanning electron microscope photographs of the joint interface between the bulk material 30 and the bulk material 31. FIG. 6A is a mapping image of SiK_{α} obtained through EDX analysis, and FIG. 6B is a mapping image of AlK_{α} obtained through EDX analysis. In FIGS. 6A and 6B, the upper side of the photographs shows the SCM435 and the lower side of the photographs shows the Cu-Zn based alloy. It is evident from FIG. 6A that Si exhibits a strong concentration gradient. Further, it is evident from FIG. 6B that Al also exhibits a concentration gradient, albeit not as strongly as Si. It is therefore believed that by including Si and Al in the Cu-Zn based alloy, the diffusion of Fe atoms to the Cu-Zn based alloy side is assisted. In other words, it is believed that by including at least one of Al and Si in the Cu-Zn based alloy, formation of a columnar configuration is assisted.

Next, a joint strength of the bulk material 30 and the bulk material 31 will be described. The joint strength was evaluated in a peel test performed by pulling the joined bulk material 30 and bulk material 31 in opposite directions and measuring a peel strength at a point where the bulk material 30 and the bulk material 31 peeled away from each other. Table 2 shows results of the peel test, and Table 3 shows results of a peel test performed on a comparative material. The comparative material was obtained by a conventional manufacturing method in which low carbon steel and a Cu alloy were joined by sintering a Cu alloy powder onto a copper base layer plated to the low carbon steel. Table 4 shows compositions of the low carbon steel and the Cu alloy powder serving as the comparative material. As is evident from Tables 2 and 3, the joint strength of the bulk material 30 and the bulk material 31 is greater than that of the comparative material. Hence, by joining the SCM435 and the Cu-Zn based alloy using the spark plasma sintering method, the two materials can be joined directly and via a columnar configuration, with the result that a higher joint strength than that of a conventional component joined through plating is obtained.

Peel test of bulk material 30 (SCM435) and bulk material 31 (Cu-Zn based alloy)

**Table 2**

| SAMPLE No. | LOAD (N) | STRENGTH (MPa) |
|---|---|---|
| 1 | 981.4 | ≧ 432 |

Peel test of comparative material

**Table 3**

| SAMPLE No. | LOAD (N) | STRENGTH (MPa) |
|---|---|---|
| 1 | 453.6 | 200 |
| 2 | 633.7 | 279 |
| 3 | 655.9 | 289 |

Compositions of low carbon steel and Cu alloy powder (wt%)

**Table 4**

| | C | Si | Mn | P | S | Ni | Cu | Pb | Fe | Sn | Ag | Impure Substance |
|---|---|---|---|---|---|---|---|---|---|---|---|---|
| low carbon steel | 0.05∼ 0.25 | ≦ 0.5 | ≦ 1.0 | ≦ 0.05 | ≦ 0.05 | | | | Rest | | | |
| Cu alloy powder | | | | | | ≦ 0.5 | Rest | 8.5∼ 11.5 | ≦ 0.5 | 8.5∼11.5 | ≦ 0.5 | ≦ 1.0 |

As described above, the bulk material 30 and the bulk material 31 are joined firmly in the second process shown in FIG. 2, whereby a raw material 32 serving as a foundation of the shoe 10 is obtained.

As shown in FIG. 2, in a third process, the raw material 32 is fashioned into a desired shape. More specifically, a part of the raw material 32 constituted by the bulk material 30 is cut into the respective shapes of the spherical washer 11 and the flat plate portion 12. Further, a part constituted by the bulk material 31 is formed into the sliding portion 14 by cutting a circular groove 31a in an end surface thereof. Finally, a through hole (not shown) penetrating in an axial direction is cut into the spherical washer 11, the flat plate portion 12, and the sliding portion 14. This through hole is used to introduce the working oil inside the piston 5 into the groove 31a in order to reduce a surface pressure between the sliding portion 14 and the swash plate 20. Note that the groove 31a is not an essential configuration and may be omitted.

Waste material generated when the raw material 32 is fashioned in this manner is mainly the SCM435 cut into the shapes of the spherical washer 11 and the flat plate portion 12, and substantially no waste material is generated from the Cu-Zn based alloy that is expensive in comparison with the SCM435. If the Cu-Zn based alloy were used to manufacture the entire shoe 10, a large amount of waste material would be generated from the Cu-Zn based alloy when cutting out the shapes of the spherical washer 11 and the flat plate portion 12. In this embodiment, however, only the sliding portion 14 that slides along the swash plate 20 is manufactured from the Cu-Zn based alloy, and therefore the amount of waste material generated from the Cu-Zn based alloy can be reduced, enabling a reduction in manufacturing cost.

In a fourth process, nitridization is implemented on the raw material 32 fashioned in the third process. More specifically, gas nitrocarburizing is implemented. In the gas nitrocarburizing, respective surfaces of the spherical washer 11 and the flat plate portion 12 made of SCM435 are nitridized by being heated to a temperature of 570°C and held for 2.5 hours in a mixed gas atmosphere of a carburizing gas (RX gas) having carbon monoxide (CO) as a main component and ammonia gas (NH₃ gas). As a result, a wear resistance, a fatigue resistance, a burn resistance, and so on of the respective surfaces of the spherical washer 11 and the flat plate portion 12 are improved. When the first to fourth processes are complete, manufacture of the shoe 10 is completed.

According to the first embodiment described above, following effects are obtained.

By applying heat and pressure using the spark plasma sintering method, a solid phase joint can be formed between the SCM435 and the Cu-Zn based alloy directly without inserting a binder such as plating, as defined in the present invention. Hence, the main body portion 13 that is coupled to the tip end of the piston 5 to be free to rotate and therefore requires strength can be constructed using the SCM435, while the sliding portion 14 that slides along the swash plate 20 and therefore requires a sliding ability can be constructed using the Cu-Zn based alloy. As a result, a highly functional bimetal shoe 10 combining respective advantages of the SCM435 and the Cu-Zn based alloy is obtained.

Further, by forming a solid phase joint between the bulk material 30 made of the SCM435 and the bulk material 31 made of the Cu-Zn based alloy using the spark plasma sintering method, the two materials are joined via a columnar configuration, and therefore a high degree of joint strength is obtained.

Hence, by applying heat and pressure using the spark plasma sintering method, the bulk material 30 made of the SCM435 and the bulk material 31 made of the Cu-Zn based alloy can be joined easily and with a high degree of joint strength.

### < Example, not covered by the present invention >

A following description of the present example, not covered by the present invention, centers on differences to the first embodiment according to the present invention. Identical configurations to the first embodiment have been allocated identical reference symbols, and description thereof has been omitted.

In the first embodiment, a case in which the Cu alloy of the bulk material 31 is a Cu-Zn based alloy was described. However, the Cu alloy is not limited to a Cu-Zn based alloy, and therefore, in the present example, not covered by the present invention, a case in which the Cu alloy of the bulk material 31 is a Cu-Ni based alloy will be described. A Cu-Ni based alloy is an alloy having copper as a main component and containing nickel. It should be noted, however, that when an amount of nickel is large, excessive solution hardening occurs. Moreover, considering the high price of nickel, a nickel content is preferably no less than 10wt% and no more than 30wt%. Table 5 shows the composition of the bulk material 31 (Cu-Ni based alloy). Sn is added with the aim of improving a friction resistance of the sliding portion 14. The composition of the bulk material 30 (SCM435) is as shown on Table 1. The method of manufacturing the shoe 10 is identical to that of FIG. 2.

Composition of bulk material 31 (Cu-Ni based alloy) (wt%)

**Table 5**

| | Ni | Cu | Sn |
|---|---|---|---|
| Cu-Ni based alloy | 14.0 | 71.9 | 14.1 |

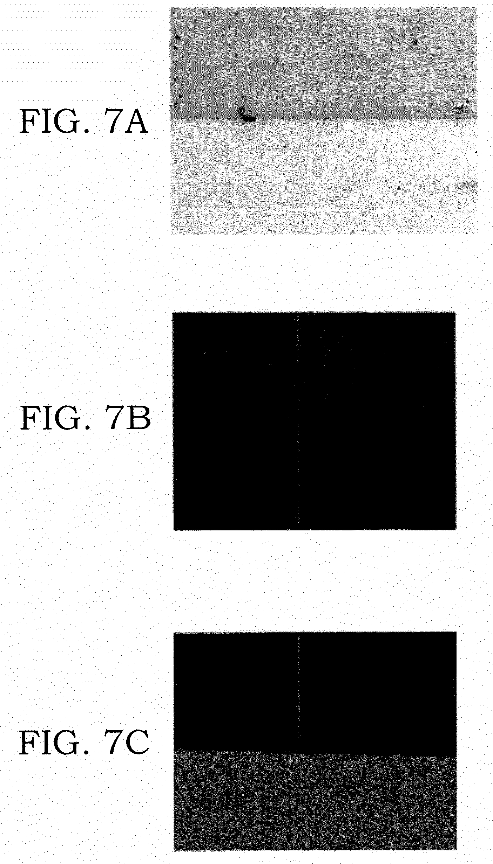

FIGS. 7A to 7C show scanning electron microscope photographs of the joint interface between the bulk material 30 and the bulk material 31 joined under the heat treatment conditions and pressure application conditions shown in FIG. 4. FIG. 7A is a secondary electron image, FIG. 7B is a mapping image of FeL_{α} obtained through EDX analysis, and FIG. 7C is a mapping image of CuL_{α} obtained through EDX analysis. In FIGS. 7A to 7C, the upper side of the photographs shows the SCM435 and the lower side of the photographs shows the Cu-Ni based alloy. Likewise when the bulk material 30 made of SCM435 is combined with the bulk material 31 made of the Cu-Ni based alloy, the two materials can be joined directly by a solid phase reaction caused by generating spark plasma on the joint interface while applying a pressing force thereto. However, as is evident from FIG. 7, formation of a columnar configuration on the joint interface was not confirmed. The reason for this is believed to be that the diffusion constant of Ni in Cu is smaller than that of Zn, and therefore diffusion is less likely to occur even when a large amount of energy is applied through spark plasma application.

Next, the joint strength of the bulk material 30 and the bulk material 31 will be described. The joint strength was evaluated in a peel test performed by pulling the joined bulk material 30 and bulk material 31 in opposite directions and measuring the peel strength at a point where the bulk material 30 and the bulk material 31 peeled away from each other. Table 6 shows results of the peel test. As is evident from Table 6, the joint strength of the bulk material 30 and the bulk material 31 is equal to the joint strength of the comparative material shown in Table 3. Hence, by joining SCM435 and a Cu-Ni based alloy using the spark plasma sintering method, an equally high joint strength to that of a conventional component is obtained even though the joint is not formed via a columnar configuration.

Peel test of bulk material 30 (SCM435) and bulk material 31 (Cu-Ni based alloy)

**Table 6**

| SAMPLE No. | LOAD (N) | STRENGTH (MPa) |
|---|---|---|
| 1 | 840.1 | 370 |
| 2 | 535.2 | 236 |

According to this example described above, when heat and pressure are applied using the spark plasma sintering method, a solid phase joint can likewise be formed between the SCM435 and the Cu-Ni based alloy directly without inserting a binder such as plating.

According to the first embodiment according to the present invention and to the example not covered by the present invention described above, by applying heat and pressure using the spark plasma sintering method, a bulk material made of an iron based metal and a bulk material made of a Cu alloy can be joined easily and with a high degree of joint strength.

The present invention is not limited to the embodiment of the present invention described above, and may of course be subjected to various modifications within the scope of the technical invention as defined in the appended claims.

For example, in the above embodiments, a method of manufacturing the shoe 10 of a swash plate type piston pump was described, but the present invention may also be applied to a method of manufacturing a shoe of a swash plate type piston motor.

Further, in the above embodiments, the shoe 10 is coupled to the tip end of the piston 5 to be free to rotate via the spherically-shaped spherical washer 11. Instead, however, a spherical portion may be provided on the tip end of the piston 5 and a recessed spherical washer may be provided in the main body portion 13 of the shoe 10 such that the shoe 10 is coupled to the spherical portion on the tip end of the piston 5 to be free to rotate via the recessed spherical washer.

Furthermore, in the first embodiment of the present invention and in the example, the shoe 10 of a swash plate type piston pump motor serves as a sliding member according to the present invention. However, the sliding member is not limited thereto, and may be a slide bearing that supports a shaft.

### INDUSTRIAL APPLICABILITY

A sliding member manufactured using the method of manufacturing a sliding member having a sliding portion according to the present invention may be applied to a shoe of a piston pump motor.

## Claims

1. A method of manufacturing a sliding member (10) having a sliding portion (14), **characterized in that** the sliding member (10) is manufactured by forming a solid phase joint between a bulk material (30) that is made of an iron based metal and functions as a main body portion (13) of the sliding member (10) and a bulk material (31) that is made of a Cu-Zn based alloy and functions as the sliding portion (14) directly without inserting a binder such as plating by applying heat and pressure thereto using a spark plasma sintering method.

2. The method as defined in Claim 1, wherein
the bulk material (30) made of the iron based metal and the bulk material (31) made of the Cu-Zn based alloy are joined via a columnar configuration.

3. The method as defined in Claim 2, wherein the Cu-Zn based alloy contains at least one of Al and Si.

4. The method as defined in Claim 1, wherein the sliding member is a shoe (10) of a piston pump motor (100), which is coupled to a tip end of a piston (5) to be free to rotate and slides along a swash plate (20),
the iron based metal functions as the main body portion (13), which is coupled to the tip end of the piston (5) to be free to rotate, and
the Cu-Zn based alloy functions as the sliding portion (14), which slides along the swash plate (20).

5. A method as defined in claim 1, wherein the Cu-Zn based alloy contains at least one of Al and Si.

## Patentansprüche

1. Verfahren zur Herstellung eines Gleitelements (10) mit einem Gleitabschnitt (14),
**dadurch gekennzeichnet, dass** das Gleitelement (10) durch Bilden einer festphasigen Verbindung zwischen einem Schüttmaterial (30), das aus einem eisenbasierten Metall besteht und als ein Hauptkörperabschnitt (13) des Gleitelements (10) fungiert, und einem Schüttmaterial (31), bei dem es sich um eine Cu-Zn-basierte Legierung handelt und das als der Gleitabschnitt (14) dient, direkt ohne Hinzufügen eines Bindemittels wie beispielsweise Plattieren durch Anwenden von Wärme und Druck darauf unter Verwendung eines Funkenplasmasinterverfahrens hergestellt wird.

2. Verfahren nach Anspruch 1, wobei
das Schüttmaterial (30), das aus dem eisenbasierten Metall besteht, und das Schüttmaterial (31), das aus der Cu-Zn-basierten Legierung besteht, über eine säulenartige Konfiguration verbunden werden.

3. Verfahren nach Anspruch 2, wobei die Cu-Zn-basierte Legierung mindestens eines aus Al und Si enthält.

4. Verfahren nach Anspruch 1, wobei das Gleitelement ein Gleitsegment (10) eines Kolbenpumpenmotors (100) ist, das mit einem Spitzenende eines Kolbens (5) verbunden ist, so dass es sich frei drehen kann und entlang einer Taumelscheibe (20) gleitet,
wobei das eisenbasierte Metall als der Hauptkörperabschnitt (13) fungiert, der mit dem Spitzenende des Kolbens (5) verbunden ist, um sich frei drehen zu können, und
die Cu-Zn-basierte Legierung als der Gleitabschnitt (14) fungiert, der entlang der Taumelscheibe (20) gleitet.

5. Verfahren nach Anspruch 1, wobei die Cu-Zn-basierte Legierung mindestens eines aus Al und Si enthält.

## Revendications

1. Procédé de fabrication d'un élément glissant (10) comportant une portion glissante (14),
**caractérisé en ce que** l'élément glissant (10) est fabriqué en formant une jonction en phase solide entre un matériau en vrac (30), qui est constitué d'un métal à base ferreuse et fonctionne comme une portion de corps principale (13) de l'élément glissant (10), et un matériau en vrac (31), qui est constitué d'un alliage à base Cu-Zn et fonctionne directement comme portion glissante (14) sans l'insertion d'un liant, tel que par placage, en y appliquant de la chaleur et de la pression via un procédé de frittage flash.

2. Procédé selon la revendication 1, dans lequel
le matériau en vrac (30) constitué du métal à base ferreuse et le matériau en vrac (31) constitué de l'alliage à base Cu-Zn sont joints via une configuration en colonnes.

3. Procédé selon la revendication 2, dans lequel l'alliage à base Cu-Zn contient au moins un élément parmi Al et Si.

4. Procédé selon la revendication 1, dans lequel
l'élément glissant est un sabot (10) d'un moteur de pompe à piston (100), qui est couplé à une extrémité de pointe d'un piston (5) de manière à pouvoir tourner et glisser librement sur un plateau oscillant (20),
le métal à base ferreuse fonctionne comme la portion de corps principale (13), qui est couplée à l'extrémité de pointe du piston (5) de manière à pouvoir tourner librement, et
l'alliage à base Cu-Zn fonctionne comme la portion glissante (14), qui glisse sur le plateau oscillant (20).

5. Procédé selon la revendication 1, dans lequel l'alliage à base Cu-Zn contient au moins un élément parmi Al et Si.
